# EUROPÄISCHE PATENTSCHRIFT

(11) **EP 3 744 021 B1**
(45) Veröffentlichungstag und Bekanntmachung des Hinweises auf die Patenterteilung: **28.09.2022**
(21) Anmeldenummer: 18829329.4
(22) Anmeldetag: 18.12.2018
(51) Int. Cl.: H04L 12/40

(54) **TEILNEHMERSTATION FÜR EIN SERIELLES KOMMUNIKATIONSNETZWERK UND VERFAHREN ZUR KORREKTUR VON EINZELFEHLERN IN EINER NACHRICHT EINES SERIELLEN KOMMUNIKATIONSNETZWERKS**
SUBSCRIBER STATION FOR A SERIAL COMMUNICATION NETWORK, AND METHOD FOR CORRECTING INDIVIDUAL ERRORS IN A MESSAGE OF A SERIAL COMMUNICATION NETWORK
STATION D'ABONNÉ POUR UN RÉSEAU DE COMMUNICATION EN SÉRIE ET PROCÉDÉ DE CORRECTION DES ERREURS UNIQUES DANS UN MESSAGE D'UN RÉSEAU DE COMMUNICATION EN SÉRIE

(30) Priorität: 22.12.2017 DE 102017223776
(43) Veröffentlichungstag der Anmeldung: 02.12.2020
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2018/085645
(87) Internationale Veröffentlichungsnummer: WO 2019/121779

(56) Entgegenhaltungen:
- EP-A1- 2 343 812
- EP-A1- 3 054 627
- US-A1- 2002 166 091

## Beschreibung

### Technisches Gebiet

Die vorliegende Erfindung betrifft eine Teilnehmerstation für ein serielles Kommunikationsnetzwerk und ein Verfahren zur Korrektur von Einzelfehlern in einer Nachricht eines seriellen Kommunikationsnetzwerks.

### Stand der Technik

Zur Übertragung von Daten zwischen zwei Teilnehmerstationen eines Kommunikationsnetzwerks wird ein Kommunikations-Protokoll verwendet. Das Protokoll legt fest, nach welchem Muster die Daten in zu übertragende Pakete oder Nachrichten zusammengefasst werden. Hierbei werden bei einem seriellen Kommunikationsnetzwerk verschiedene Nachrichten und somit auch die Daten, die in den Nachrichten in aufeinanderfolgenden Bits codiert sind, nacheinander über eine Kommunikationsleitung des Kommunikationsnetzwerks gesendet.

Zur Sicherung der korrekten Kommunikation in dem Kommunikationsnetzwerk umfassen einige serielle Kommunikations-Protokolle eine Fehlerkennung, wie beispielsweise ein Parity-Bit, eine Prüfsumme bzw. eine CRC (= Cyclic Redundancy Check). Mit der Fehlerkennung ist es möglich, dass die Empfänger einer Nachricht dem Sender eine Rückmeldung geben, ob die Empfänger in der empfangenen Nachricht einen Fehler erkannt haben oder nicht.

Beispielsweise übertragen die Kommunikationsnetzwerke CAN, LIN, FlexRay, oder Ethernet die Nachricht zusammen mit einer Prüfsumme (CRC), um Bitfehler in der Nachricht erkennen zu können. Beispielsweise hat das CRC-Polynom des CAN-Protokolls eine Hamming-Distance von 6, es können also bis zu 5 Bitfehler erkannt werden. EP 3 054 627 A1 zeigt ein Hochgeschwindigkeits-CAN-Kommunikationssystem, das zusammen mit CAN-Busteilnehmern betrieben werden kann.

Bei üblichen Zweidraht-Bussen in Fahrzeigen wird im Allgemeinen eine BitFehler-Wahrscheinlichkeit von 10⁻⁶ angenommen, wobei die Fehler-Wahrscheinlichkeit mit zunehmender Nachrichten- oder Rahmenlänge ansteigt. Beispielsweise enthalten 4KByte lange Rahmen mit einer Wahrscheinlichkeit von etwa 3.3% mindestens einen Fehler. Dadurch wäre dann jeder 30. Rahmen ungültig.

Wurde in dem Kommunikationsnetzwerk eine Nachricht durch (erkannte) Bitfehler verfälscht, wird sie von den Empfängern nicht akzeptiert und muss noch einmal gesendet werden. Dies erhöht die Übertragungslast des Kommunikationsnetzwerks und verzögert durch doppelte Übertragung von Nachrichten gegebenenfalls die Kommunikation in dem Kommunikationsnetzwerk.

Um die Fehlerquote in seriellen Kommunikationsnetzwerken niedrig zu halten, spezifizieren die Kommunikations-Protokolle für eine serielle, nicht modulierte Übertragung zusätzliche Frame-Bits, die bestimmte Synchronisations-Flanken bewirken, um die Empfänger auf den Sender des Frames zu synchronisieren. Bei LIN, das in der ISO 17987 spezifiziert ist, sind hierfür zwei zusätzliche Bits pro Byte, ein Start-Bit vor und ein dazu inverses Stop-Bit nach dem Byte eingefügt. Bei FlexRay, dass in der ISO 17458 spezifiziert ist, ist für die beschriebene Synchronisation vor jedem Byte eine zwei Bit lange Byte-Start-Sequenz eingefügt. Bei CAN, das in der ISO 11898 spezifiziert ist, sind Stuff-Bits vorgesehen, die nach fünf gleichen Bits als dazu inverses Bit in den Datenstrom eingefügt werden. Bei LIN und FlexRay enthalten also 20% der übertragenen Bits keine Nutzdaten, CAN ist nur wenig besser, auch wenn gegebenenfalls nur nach 10 gleichen Bits anstelle von 5 gleichen Bits ein Stuff-Bit mit inversem Pegel eingefügt wird.

Auch diese beschriebene Maßnahme zur Senkung der Fehlerquote der Übertragung erhöht die Übertragungslast des Kommunikationsnetzwerks und verzögert durch Übertragung von 20% Nicht-Nutzdaten die Kommunikation in dem Kommunikationsnetzwerk.

US 2002/166091 A1 offenbart ein Verfahren und eine Vorrichtung zur Fehlerkorrektur, die Datenpaketen einen Fehlerkorrekturcode zuordnen.

EP 2 343 812 A1 und EP 3 054 627 A1 zeigen Vorrichtungen und ein Verfahren zum drahtlosen Senden und Empfangen von verschlüsselten Daten.

### Offenbarung der Erfindung

Daher ist es Aufgabe der vorliegenden Erfindung, eine Teilnehmerstation für ein serielles Kommunikationsnetzwerk und ein Verfahren zur Korrektur von Einzelfehlern in einer Nachricht eines seriellen Kommunikationsnetzwerks bereitzustellen, welche die zuvor genannten Probleme lösen. Insbesondere sollen eine Teilnehmerstation für ein serielles Kommunikationsnetzwerk und ein Verfahren zur Korrektur von Einzelfehlern in einer Nachricht eines seriellen Kommunikationsnetzwerks bereitgestellt werden, bei welchen eine Übertragung von Nachrichten mit niedriger Fehlerquote und höherer Bitrate als bisher möglich ist.

Die Aufgabe wird durch eine Teilnehmerstation für ein serielles Kommunikationsnetzwerk mit den Merkmalen des Anspruchs 1 gelöst. Die Teilnehmerstation umfasst eine Kommunikationssteuereinrichtung zum Erstellen einer Nachricht, die seriell an mindestens eine weitere Teilnehmerstation des Kommunikationsnetzwerks zu senden ist, wobei die Kommunikationssteuereinrichtung ausgestaltet ist, die Daten der zu erstellenden Nachricht in mindestens einen Datenabschnitt zu unterteilen und in jeden Datenabschnitt Bits eines Fehlerkorrektur-Codes einzufügen, welcher eine Korrektur von mindestens einem Fehler in der Nachricht ermöglicht, wie in Anspruch 1 beschrieben.

Mit der Teilnehmerstation wird eine Fehlerkorrektur-Codierung bereitgestellt, die gleichzeitig eine genügende Anzahl an Synchronisations-Flanken bereitstellen kann, mit Hilfe welcher sich Empfänger einer seriell übertragenen Nachricht auf den Sender der Nachricht synchronisieren können. Hierbei ist vorteilhaft bei Einzelfehlern eine Wiederholung der Übertragung nicht notwendig. Noch dazu können bei einer vorteilhaften Ausgestaltung der Teilnehmerstation die bisher benötigten Synchronisations-Bits, die keine Information transportieren, eingespart werden.

Dadurch wird die Fehlerquote der Nachrichtenübertragung in dem Kommunikationsnetzwerk und somit die Häufigkeit von Mehrfach-Übertragungen von Nachrichten markant gesenkt. Dies ermöglicht höhere Bitraten bei gleichzeitig sicherer Datenübertragung in dem seriellen Kommunikationsnetzwerk.

Vorteilhafte weitere Ausgestaltungen der Teilnehmerstation sind in den abhängigen Ansprüchen angegeben.

Bei einem Ausführungsbeispiel ist der Fehlerkorrektur-Code derart ausgestaltet, dass die Korrektur eines Einzelfehlers in jedem Datenabschnitt möglich ist und ein Doppelfehler in dem zugehörigen Datenabschnitt erkannt werden kann.

Denkbar ist, dass der mindestens eine Fehler in der Nachricht ein Einzelfehler oder ein Doppelfehler ist.

Möglicherweise ist die Kommunikationssteuereinrichtung ausgestaltet, am Ende der Nachricht eine Prüfsumme zu ergänzen, welche auf eventuell korrigierte Daten-Bits angewendet ist.

Die Kommunikationssteuereinrichtung ist ausgestaltet, die Bits des Fehlerkorrektur-Codes als eine Synchronisations-Flanke so einzufügen, dass der Abstand der Synchronisations-Flanken, welche für eine Synchronisation der mindestens einen weiteren Teilnehmerstation als Empfänger der Nachricht auf die Teilnehmerstation als Sender der Nachricht vorgesehen sind, eine vorbestimmte Obergrenze nicht überschreitet.

Möglicherweise ist die mindestens eine Synchronisations-Flanke für eine Hard-Synchronisation oder eine Re-Synchronisation vorgesehen.

Denkbar ist, dass die Bits des Fehlerkorrektur-Codes Einzel-Bits oder Doppelbits sind oder der Fehlerkorrektur-Code eine Kombination von Einzel-Bits und Doppelbits aufweist.

In einer speziellen Variante kann die Teilnehmerstation für ein Kommunikationsnetzwerk ausgestaltet sein, bei welchem zumindest zeitweise ein exklusiver, kollisionsfreier Zugriff einer Teilnehmerstation auf eine Busleitung des Kommunikationsnetzwerks gewährleistet ist.

Die Nachricht ist insbesondere eine CAN-Nachricht oder eine CAN FD-Nachricht.

Die zuvor beschriebene Teilnehmerstation kann Teil eines Kommunikationsnetzwerks sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Korrektur von Einzelfehlern in einer Nachricht eines seriellen Kommunikationsnetzwerks nach Anspruch 10 gelöst. Das Verfahren hat den Schritt: Erstellen, mit einer Kommunikationssteuereinrichtung, einer Nachricht, die seriell an mindestens eine weitere Teilnehmerstation des Kommunikationsnetzwerks zu senden ist, wobei die Kommunikationssteuereinrichtung die Daten der zu erstellenden Nachricht in mindestens einen Datenabschnitt unterteilt und in jeden Datenabschnitt Bits eines Fehlerkorrektur-Codes einfügt, welcher eine Korrektur von mindestens einem Fehler in der Nachricht ermöglicht, wie in Anspruch 10 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Kommunikationsnetzwerks gemäß einem ersten Ausführungsbeispiel;
Fig. 2 ein Schaubild zur Veranschaulichung des Aufbaus von Nachrichten, die von Teilnehmerstationen des Kommunikationsnetzwerks gemäß dem ersten Ausführungsbeispiel gesendet werden können;
Fig. 3 eine schematische Darstellung eines Teils einer Nachricht für ein spezielles Beispiel einer Einfügung von Fehlerkorrektur-Bits in einer Datenphase einer Nachricht bei einer Teilnehmerstation des Kommunikationsnetzwerks gemäß dem ersten Ausführungsbeispiel; und
Fig. 4 eine schematische Darstellung eines Teils einer Nachricht für ein spezielles Beispiel einer Einfügung von Fehlerkorrektur-Bits in einer Datenphase einer Nachricht bei einer Teilnehmerstation eines Kommunikationsnetzwerks gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

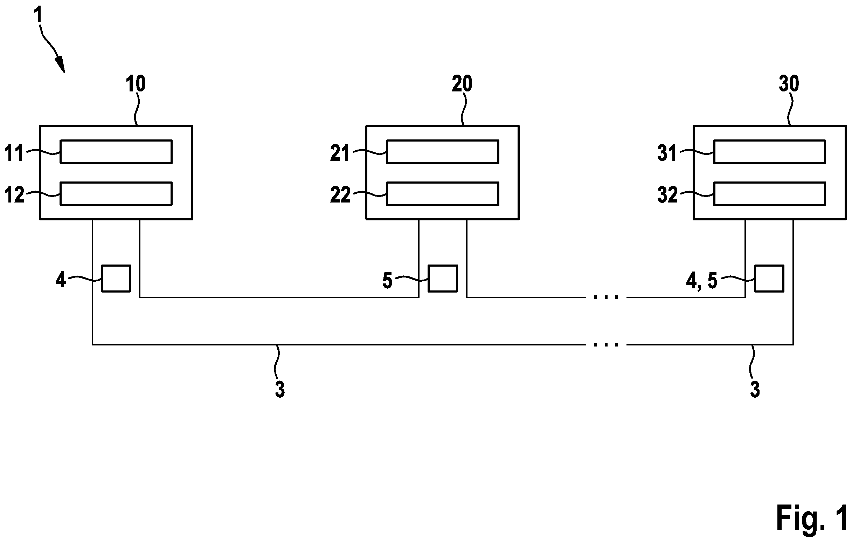

Fig. 1 zeigt als Beispiel ein serielles Kommunikationsnetzwerk 1, das als ein beliebiges serielles Kommunikationsnetzwerk ausgestaltet sein kann. Insbesondere ist das Kommunikationsnetzwerk 1 ein CAN-Bussystem, CAN FD-Bussystem, LIN-Bussystem, FlexRay- Bussystem, Bussystem für Ethernet, Gigabit-Ethernet, usw.. Das Kommunikationsnetzwerk 1 ist in einem Fahrzeug, insbesondere einem Kraftfahrzeug, einem Flugzeug, usw., oder im Krankenhaus usw. verwendbar.

In Fig. 1 hat das Kommunikationsnetzwerk 1 eine, insbesondere parallele, Busleitung 3, an die eine Vielzahl von Teilnehmerstationen 10, 20, 30 angeschlossen sind. Über die Busleitung 3 sind Nachrichten 4, 5 in der Form von Signalen zwischen den einzelnen Teilnehmerstationen 10, 20, 30 seriell übertragbar. Die Teilnehmerstationen 10, 20, 30 sind beliebige Geräte, die miteinander Daten austauschen sollen, wie beispielsweise Steuergeräte, Sensoren, Anzeigevorrichtungen, usw. eines Kraftfahrzeugs. Alternativ sind die Teilnehmerstationen 10, 20, 30 beispielsweise Computer eines Computernetzwerks oder Komponenten eines Automatisierungsnetzwerks, insbesondere für eine industrielle Anlage. Die Teilnehmerstationen 10, 20, 30 sind jedoch nicht auf die genannten speziellen Beispiele beschränkt.

Nachfolgend ist die Erfindung als Beispiel anhand des CAN- und CAN-FD-Kommunikationsnetzwerks bzw. Bussystems beschrieben. Jedoch ist die Erfindung nicht darauf beschränkt, sondern die Erfindung kann auf ein beliebiges serielles Kommunikationsnetzwerk angewendet werden.

Wie in Fig. 1 gezeigt, hat die Teilnehmerstation 10 eine Kommunikationssteuereinrichtung 11 und eine Sende-/Empfangseinrichtung 12. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an die Busleitung 3 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der Teilnehmerstationen 10, 20, 30, die an die Busleitung 3 angeschlossen sind.

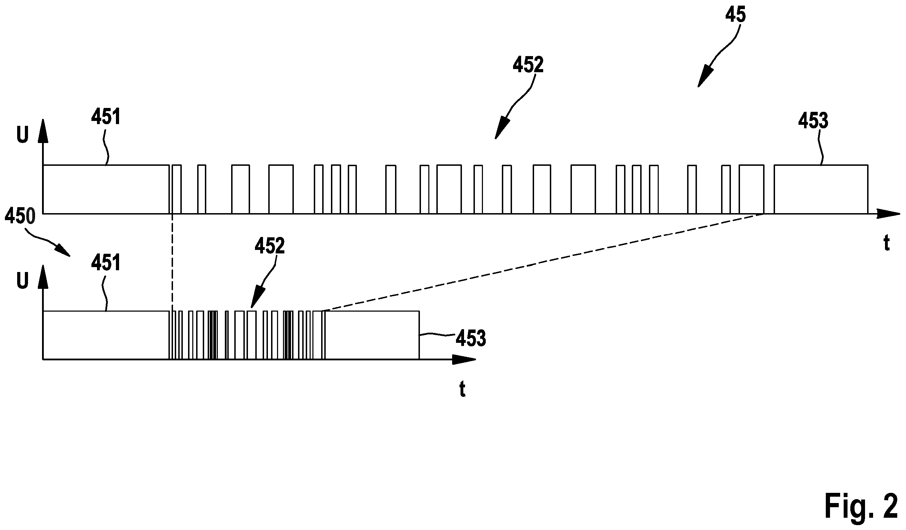

Die Kommunikationssteuereinrichtung 11 kann für das Beispiel des CAN-Bussystems bis auf die nachfolgend noch genauer beschriebenen Unterschiede wie ein herkömmlicher CAN-Controller ausgeführt sein. In diesem Fall erstellt und liest die Kommunikationssteuereinrichtung 11 erste Nachrichten 4, beispielsweise modifizierte Classic CAN-Nachrichten 4. Die Classic CAN-Nachrichten 4 sind bis auf die nachfolgend beschriebenen Modifikationen gemäß dem Classic Basisformat aufgebaut, bei welcher in der Nachricht 4 eine Anzahl von bis zu 8 Datenbytes umfasst sein können, wie im oberen Teil von Fig. 2 gezeigt.

Die Kommunikationssteuereinrichtung 21 in Fig. 1 kann für das Beispiel des CAN-Bussystems bis auf die nachfolgend noch genauer beschriebenen Unterschiede wie ein herkömmlicher CAN FD-Controller ausgeführt sein. In diesem Fall erstellt und liest die Kommunikationssteuereinrichtung 21 zweite Nachrichten 5, die beispielsweise modifizierte CAN FD-Nachrichten 5 sind. Hierbei sind die modifizierten CAN FD-Nachrichten 5 bis auf die nachfolgend beschriebenen Modifikationen auf der Grundlage eines CAN FD-Formats aufgebaut, bei welcher in der Nachricht 5 eine Anzahl von bis zu beispielsweise 64 Datenbytes umfasst sein können, wie im unteren Teil von Fig. 2 gezeigt.

Die Kommunikationssteuereinrichtung 31 kann für das Beispiel des CAN-Bussystems ausgeführt sein, um je nach Bedarf eine modifizierte Classic CAN-Nachricht 4 oder eine modifizierte CAN FD-Nachricht 5 für die Sende-/Empfangseinrichtung 32 bereitzustellen oder von dieser zu empfangen. Die Kommunikationssteuereinrichtung 21 erstellt und liest also eine erste Nachricht 4 oder zweite Nachricht 5, wobei sich die erste und zweite Nachricht 4, 5 durch ihren Datenübertragungsstandard unterscheiden, nämlich in diesem Fall modifiziertes CAN oder modifiziertes CAN FD.

Die Sende-/Empfangseinrichtung 12 kann somit wie ein herkömmlicher CAN Transceiver ausgeführt sein. Die Sende-/Empfangseinrichtung 22 kann wie ein herkömmlicher CAN FD-Transceiver ausgeführt sein. Die Sende-/Empfangseinrichtung 32 kann ausgeführt sein, um je nach Bedarf Nachrichten 4 gemäß dem modifizierten CAN-Basisformat oder Nachrichten 5 gemäß dem modifizierten CAN FD-Format für die Kommunikationssteuereinrichtung 31 bereitzustellen oder von dieser zu empfangen.

Mit den beiden Teilnehmerstationen 20, 30 ist eine Bildung und dann Übertragung von Nachrichten 5 mit dem modifizierten CAN FD oder auch mit höheren Datenraten als CAN FD realisierbar.

Fig. 2 zeigt in ihrem oberen Teil für die Nachricht 4 einen CAN-Rahmen 45, wie er von der Sende-/Empfangseinrichtung 12 oder der Sende-/Empfangseinrichtung 13 gesendet wird, und in ihrem unteren Teil für die Nachricht 5 einen CAN-FD-Rahmen 450, wie er von der Sende-/Empfangseinrichtung 22 oder 32 gesendet werden kann. Der CAN-Rahmen 45 und der CAN-FD-Rahmen 450 sind für die CAN-Kommunikation auf dem Bus 40 grundlegend in zwei unterschiedliche Phasen oder Bereiche unterteilt, nämlich die Arbitrationsphasen 451, 453 und einen Datenbereich 452, der bei Classical CAN auch Datenfeld bzw. bei CAN-FD auch Datenphase 452 genannt wird. In der Datenphase 452 sind die Nutzdaten des CAN-FD-Rahmens bzw. der Nachricht 5 enthalten.

Gemäß Fig. 2 wird bei CAN-FD im Vergleich zum klassischen CAN am Ende der Arbitrationsphase 451 die Bitrate für die folgende Datenphase 452 auf beispielsweise 2, 4, 8Mbps erhöht. Damit gilt, dass bei CAN-FD die Bitrate in den Arbitrationsphasen 451, 453 kleiner als die Bitrate in der Datenphase 452 ist. Bei CAN-FD ist die Datenphase 452 des CAN FD Rahmens 450 gegenüber der Datenphase 452 des CAN-Rahmens 45 zeitlich deutlich verkürzt.

Bei einem seriellen Kommunikationsnetzwerk 1 oder Bussystem ohne Arbitration 451, 453, wie beispielsweise Ethernet, FlexRay, usw., folgen zwei Datenphasen 452 direkt nacheinander.

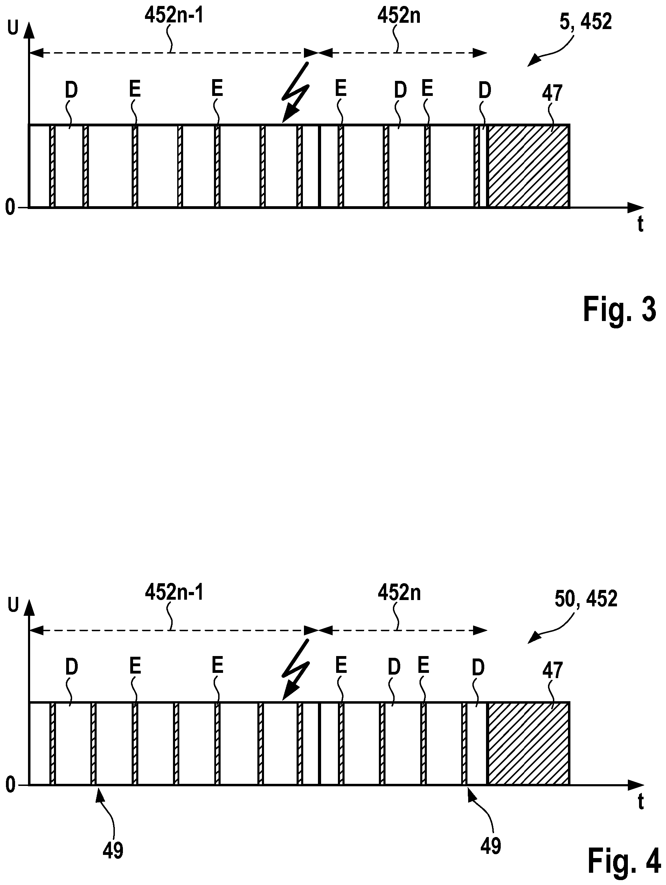

Fig. 3 veranschaulicht stark vereinfacht einen Datenabschnitt einer Datenphase 452 für eine Nachricht 5 als Beispiel, die über eine Zweidraht-Busleitung als die Busleitung 3 seriell übertragbar ist. Alternativ ist eine Nachricht 4 verwendbar oder eine Nachricht, die gemäß einem anderen seriellen Kommunikations-Protokoll aufgebaut ist.

Die Datenphase 452 ist in eine Vielzahl von Datenabschnitte 4521 bis 452n unterteilt, wobei n eine natürliche Zahl ist. Sind beispielsweise 4096 Datenbytes vorhanden, könnte n insbesondere als 512 gewählt werden, so dass jeweils Datenabschnitte 4521 bis 452n mit 8 Daten-Bytes vorhanden sind. Es sind jedoch beliebige andere Werte für n wählbar. Die Datenabschnitte 4521 bis 452n können insbesondere mehr oder weniger als 8 Daten-Bytes haben.

Von den Datenabschnitten 4521 bis 452n sind in Fig. 3 der Einfachheit halber nur zwei Datenabschnitte gezeigt, nämlich die beiden Datenabschnitte 452n-1 und 452n am Ende der Datenphase 452.

In die Datenabschnitte 452n-1 und 452n sind jeweils Bits E eines FehlerKorrektur-Codes eingefügt, die nachfolgend auch Fehlerkorrektur-Bits E genannt sind. Zur Vereinfachung sind in Fig. 3 die einzelnen Bits D der Nachricht 5 nicht dargestellt und die Bits D, E nicht alle mit einem Bezugszeichen versehen.

In dem Datenabschnitt 452n-1 ist als Beispiel ein Fehler aufgetreten, der in Form eines schwarzen gezackten Blockpfeils veranschaulicht ist. Der Fehler kann ein Einzelfehler oder ein Doppelfehler oder ein beliebiger sonstiger Fehler sein. Am Ende der Nachricht 5 ist optional eine Prüfsumme 47 bzw. eine CRC (= Cyclic Redundancy Check) vorgesehen.

Bei dem Beispiel von Fig. 3 haben die Datenabschnitte 4521 bis 452n-1 jeweils acht Bytes mit 8 Daten-Bits D und darin verteilten 8 Fehlerkorrektur-Bits E eines Fehlerkorrektur-Codes.

Somit ist bei diesem speziellen Beispiel für einen 64 Bit langen Datenabschnitt der Datenabschnitte 4521 bis 452n ein 8 Bit langer Fehlerkorrektur-Code (ECC) zu ermitteln, dessen Fehlerkorrektur-Bits E verteilt in den jeweiligen Datenabschnitt 4521 bis 452n eingefügt werden. Die Kombination von 64 Daten-Bits D mit 8 Fehlerkorrektur-Bits E lässt sich gut in Hardware implementieren, wofür es viele Beispiele gibt. Jedoch ist jede andere Kombination alternativ denkbar und umsetzbar.

Bei dem speziellen Beispiel von Fig. 3 sind die 8 Fehlerkorrektur-Bits E in einem Datenbyte der Datenabschnitte 452n-1 bis 452n gemäß einem speziellen Schema ungleich verteilt. Hierfür ist jedes Schema denkbar, nicht nur das speziell dargestellte Beispiel von Fig. 3.

Dagegen hat der Datenabschnitt 452n weniger als acht Bytes. Jedoch sind auch in dem Datenabschnitt 452n Bits eines Fehlerkorrektur-Codes verteilt.

Hierbei ergeben sich für die kürzeren Datenabschnitte wie den Datenabschnitt 452n Relationen zwischen Anzahl der Daten-Bits D und Fehlerkorrektur-Bits E, bei denen sich die Kombination der Anzahl von Daten-Bits D und der Anzahl der Fehlerkorrektur-Bits E in Hardware weniger gut abbilden lässt und dadurch etwas weniger effizient ist. Dies fällt jedoch bei langen Rahmen 45 mit beispielsweise etwa 64 oder 4kBytes oder 4096 Bytes oder länger fast gar nicht ins Gewicht, da für diese, wenn überhaupt, nur ein kürzerer Datenabschnitt mit weniger als 8 Bytes erforderlich ist, z.B. am Ende der Nachricht.

Bei der Datenphase 452 ist somit meist für jeweils 8 Daten-Bytes ein ECC-Byte mit dem Fehlerkorrektur-Code eingefügt. Da sich die Zahl der Daten-Bytes bei dem Beispiel von Fig. 3 in der Datenphase 452 nicht ohne Rest durch 8 teilen lässt, werden in dem kürzeren Rest-Abschnitt 452n ein Fehlerkorrektur-Code mit weniger als 8 Bits verteilt. Bei dem Beispiel von Fig. 3 sind 3 Bits 46 des Fehlerkorrektur-Codes verteilt.

Somit wird bei den Teilnehmerstationen 10, 20, 30 ein Verfahren durchgeführt, bei welchem seriell zu sendende Nachrichten 5 zusammen mit Fehlerkorrektur-Codes übertragen werden. Die Fehlerkorrektur-Codierung der Teilnehmerstationen 10, 20, 30 erlaubt es, beispielsweise Einzelfehler zu korrigieren. Außerdem können Doppel-Fehler erkannt werden. Somit vermeidet die Fehlerkorrektur-Codierung der Teilnehmerstationen 10, 20, 30 bei Einzelfehlern die Wiederholung der Übertragung der zunächst fehlerhaft empfangenen Nachricht 5 und die damit verbundene Verzögerung der Daten der Nachricht 5 und der Verschwendung der Last auf der Busleitung 3.

Im Unterschied dazu zeigt Fig. 4 in Bezug auf ein zweites Ausführungsbeispiel eine weitere spezielle Verteilung der Fehlerkorrektur-Bits E in den Datenabschnitten 4521 bis 452n bei einer Nachricht 50. Auch hier sind der Einfachheit halber nur zwei Datenabschnitte gezeigt, nämlich die beiden Datenabschnitte 452n-1 und 452n am Ende der Datenphase 452.

Auch bei dem Beispiel von Fig. 4 ist in dem Datenabschnitt 452n-1 ein Fehler aufgetreten, der in Form eines schwarzen gezackten Blockpfeils veranschaulicht ist. Der Fehler kann ein Einzelfehler oder ein Doppelfehler oder ein beliebiger sonstiger Fehler sein.

Gemäß Fig. 4 sind in dem Datenabschnitt 452n-1 zunächst 4 Daten-Bits D gefolgt von einem Fehlerkorrektur-Bit E, dann sieben Mal 8 Daten-Bits D gefolgt von je einem Fehlerkorrektur-Bit E und zum Schluss noch 4 Daten-Bits angeordnet, also: oder in einer anderen Notation
4D-E-8D-E-8D-E-8D-E-8D-E-8D-E-8D-E-8D-E-4D,

Die Fehlerkorrektur-Bits E werden hier als Doppel-Bits eingefügt werden, z.B. "10" für ein '1'-Bit und "01" für ein '0'-Bit. Damit können nicht mehr als 10 gleiche Bits in Folge auftreten, wodurch ein Minimum an Synchronisations-Flanken 49 sichergestellt wird. In Fig. 4 sind nicht alle Synchronisations-Flanken 49 bezeichnet.

Wird im schlechtesten Fall zwischen einem Fehlerkorrektur-Bit E="10" und einem Fehlerkorrektur-Bit E="01" eine Anzahl von 8 Daten-Bits D mit dem Wert "00000000" für einen der Datenabschnitte 4521 bis 452n eingefügt, treten 10 gleiche Bits in Folge auf. Ein solcher Fall repräsentiert den größten Abstand für die Synchronisations-Flanken 49.

Auch diese Art der Ausgestaltung und Verteilung der Fehlerkorrektur-Bits E ist für Datenabschnitte mit weniger als 8 Bytes anwendbar, wie für den Datenabschnitt 452n in Fig. 4 gezeigt.

Somit sind hier immer zwei zusätzliche Bits E pro Byte an Nutz-Daten D hinzugefügt. Jedoch bieten die hinzugefügten Fehlerkorrektur-Bits E die ECC-Funktion, was einen großen Vorteil gegenüber dem Stand der Technik bietet.

Mit anderen Worten, das zuvor beschriebene Verfahren bildet neben der Korrekturmöglichkeit mittels der Fehlerkorrektur-Bits E zudem Synchronisations-Flanken 49 aus, an welchen ein Empfänger auf den Sender zeitlich synchronisierbar ist. Die Synchronisations-Flanken 49 sind beispielsweise Flanken vom rezessiven zum dominanten Bus-Pegel, wobei einem rezessiven Bus-Pegel die logische '1' zugeordnet sein kann und einem dominanten Bus-Pegel die logische '0' zugeordnet sein kann. Die Zahl der Synchronisations-Flanken 49 kann noch dadurch gesteigert werden, dass die ECC Bits als Doppel-Bits codiert werden, z.B. "10" für '1' und "01" für '0'.

Dadurch wird mit dem Fehlerkorrektur-Code sowohl eine Fehlerkorrektur-Codierung (ECC) ausgeführt als auch genügend viele Synchronisations-Flanken 49 bereitgestellt, so dass es keine Phasen-Verschiebungen zwischen Sender und Empfänger gibt. Auch dadurch werden Fehler bei der Übertragung der Nachrichten 5 vermieden. Die Synchronisation mit Hilfe der mindestens einen Synchronisations-Flanke 49 kann als Hard-Synchronisation oder ReSynchronisation ausgeführt werden. Die Re-Synchronisation findet statt, wie zuvor beschrieben.

Die Hard-Synchronisation erfolgt beispielsweise im klassischen CAN Rahmen nur einmal am Anfang des Rahmens bzw. der Nachricht 50. Bei dem derzeitigen CAN FD erfolgt eine Hard-Synchronisation vor einer Umstellung von der langsamen auf die schnellere Bitrate in der CAN FD Nachricht, nämlich beispielsweise an der Flanke vom rezessiven FDF Bit der CAN FD Nachricht zum folgenden dominanten Reserved Bit der CAN FD Nachricht. Die weitere Synchronisation kann dann als Hard- oder Re-Synchronisation mit Hilfe der mindestens einen Synchronisations-Flanke 49 in den Datenabschnitten 4521 bis 452n der Datenphase 452 erfolgen.

Die Datenabschnitte 4521 bis 452n können auch bei dem Beispiel von Fig. 4 nicht nur weniger, sondern auch mehr als 8 Daten-Bytes haben. Hierbei ist zu beachten, je länger der einzelne Datenabschnitt 4521 bis 452n wird, desto weniger Fehlerkorrektur-Bits E sind in den Datenabschnitten 4521 bis 452n zu verteilen, welche Synchronisations-Flanken 49 garantieren. Zudem steigt bei mehr als 8 Daten-Bytes pro Datenabschnitt 4521 bis 452n der Aufwand für die Generierung und Prüfung der Fehlerkorrektur-Bits E und die Wahrscheinlichkeit, dass ein Doppel-Fehler entsteht.

Ansonsten gilt das Gleiche, wie zuvor im Zusammenhang mit dem ersten Ausführungsbeispiel beschrieben.

Gemäß einer Modifikation der zuvor beschriebenen Ausführungsbeispiele und deren Varianten ist es möglich, dass die zuvor beschriebenen Verfahren eine spezielle Prüfsumme 47 (CRC = Cyclic Redundancy Check) am Ende der Nachricht 5, 50 bzw. des Frames ergänzen. Diese Prüfsumme 47 ist nur auf die eventuell korrigierten Daten-Bits angewendet, um Mehrfach-Fehler in einem der Datenabschnitte 4521 bis 4525 zu erkennen.

Gemäß einer weiteren Modifikation der zuvor beschriebenen Ausführungsbeispiele ist es möglich, dass die zuvor beschriebenen Verfahren die Fehlerkorrektur-Bits E als Einzel-Bits einfügen und gleichzeitig ausreichend viele Synchronisations-Flanken 49 bereitstellen. Vorteilhaft daran ist, dass nur ein Fehlerkorrektur-Bit E pro 8 Daten-Bits D eingefügt werden muss, was die Nettodatenrate gegenüber Doppel-Bits als Fehlerkorrektur-Bits E erhöht.

Selbstverständlich ist es möglich, dass der Fehlerkorrektur-Code eine Kombination von Einzel-Bits und Doppelbits aufweist, wobei mindestens ein Einzel-Bit oder mindestens ein Doppelbit vorhanden sein kann.

Gemäß noch einer weiteren Modifikation der zuvor beschriebenen Ausführungsbeispiele ist es möglich, dass die zuvor beschriebenen Verfahren die Fehlerkorrektur-Bits E so zwischen den Datenabschnitten 4521 bis 4525 anordnen, dass ein ausreichender maximaler Abstand zwischen Synchronisierungs-Flanken 49 gewährleistet wird, ohne dass Stuff-Bits, die nach fünf gleichen Bits als dazu inverses Bit in den Datenstrom eingefügt werden, oder Start- und Stop-Bits eingefügt werden müssen. In diesem Fall ist die jeweilige Kommunikationssteuereinrichtung 11, 21, 31 ausgestaltet die Fehlerkorrektur-Bits E des Fehlerkorrektur-Codes als mindestens eine Synchronisations-Flanke 49 so einzufügen, dass der Abstand der Synchronisations-Flanken 49 eine vorbestimmte Obergrenze nicht überschreitet.

Hierbei können auch die Stuff-Bits eingespart werden, die bei einer vorbestimmten Anzahl von Bits mit gleichem Pegel zwangsweise als inverses Bit eingefügt werden, wenn der Fehlerkorrektur-Code bzw. die Codierung für die Generierung der Fehlerkorrektur-Bits E garantiert, dass maximal 10 gleiche Bits aufeinanderfolgen. Ein derartiger Fehlerkorrektur-Code resultiert in einer Takttoleranz, die einem CAN-Rahmen 45 mit einer Stuff-Länge von 10 entspricht.

Das erlaubt es, den zusätzlichen Aufwand für die Fehlerkorrektur-Bits E durch den Wegfall der Stuff- oder Start- und Stop-Bits auszugleichen. Insgesamt kann mit den zuvor beschriebenen Ausführungsbeispielen und deren Ausführungsvarianten oder Modifikationen durch eine Verringerung der Fehler bei der Übertragung eine verbesserte Nutzung der verfügbaren Buskapazität und eine höhere Bitrate in dem Kommunikationsnetzwerk 1 erzielt werden.

Alle zuvor beschriebenen Ausgestaltungen des Kommunikationsnetzwerks 1, der Teilnehmerstationen 10, 20, 30 und des von diesem ausgeführten Verfahren können einzeln oder in allen möglichen Kombinationen Verwendung finden. Insbesondere können alle Merkmale der zuvor beschriebenen Ausführungsbeispiele und/oder deren Ausführungsvarianten und/oder deren Modifikationen beliebig kombiniert werden. Zusätzlich oder alternativ sind insbesondere folgende Modifikationen denkbar.

Das zuvor beschriebene Kommunikationsnetzwerk 1 gemäß den Ausführungsbeispielen ist anhand eines auf dem CAN-Protokoll basierenden Bussystems beschrieben. Das Kommunikationsnetzwerk 1 gemäß den Ausführungsbeispielen kann jedoch auch eine andere Art von seriellem Kommunikationsnetz sein. Es ist vorteilhaft, jedoch nicht zwangsläufige Voraussetzung, dass bei dem Kommunikationsnetzwerk 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Kommunikationsnetzwerk 1 der Ausführungsbeispiele ist beliebig. Insbesondere kann die Teilnehmerstation 10 in dem Kommunikationsnetzwerk 1 entfallen. Es ist möglich, dass eine oder mehrere der Teilnehmerstationen 10 oder 20 oder 30 in dem Kommunikationsnetzwerk 1 vorhanden sind.

## Patentansprüche

1. Teilnehmerstation (10; 20; 30) für ein serielles Kommunikationsnetzwerk (1), mit
einer Kommunikationssteuereinrichtung (11; 21; 31) zum Erstellen einer Nachricht (4; 5; 50), die seriell an mindestens eine weitere Teilnehmerstation (20; 30; 10) des Kommunikationsnetzwerks (1) zu senden ist,
wobei die Kommunikationssteuereinrichtung (11; 21; 31) ausgestaltet ist, die Daten der zu erstellenden Nachricht (4; 5; 50) in mindestens einen Datenabschnitt (4521 bis 452n) zu unterteilen und in jeden Datenabschnitt (4521 bis 452n) Bits (E) eines Fehlerkorrektur-Codes (46; 460) einzufügen, welcher eine Korrektur von mindestens einem Fehler in der Nachricht (4; 5; 50) ermöglicht,
**dadurch gekennzeichnet, dass**
die Kommunikationssteuereinrichtung (11; 21; 31) ausgestaltet ist,
die Bits (E) des Fehlerkorrektur-Codes als Synchronisations-Flanken (49) so einzufügen, dass der Abstand der Synchronisations-Flanken (49), welche für eine Synchronisation der mindestens einen weiteren Teilnehmerstation (20; 30; 10) als Empfänger der Nachricht (4; 5; 50) auf die Teilnehmerstation (10; 20; 30) als Sender der Nachricht (4; 5; 50) vorgesehen sind, eine vorbestimmte Obergrenze nicht überschreitet, und
wobei die vorbestimmte Obergrenze gleich einer vorbestimmten Anzahl von Bits ist, die den gleichen Wert haben und die in Folge zwischen Bits (E) des Fehlerkorrektur-Codes auftreten.

2. Teilnehmerstation (10; 20; 30) nach Anspruch 1, wobei der Fehlerkorrektur-Code derart ausgestaltet ist, dass die Korrektur eines Einzelfehlers in jedem Datenabschnitt (4521 bis 452n) möglich ist und ein Doppelfehler in dem zugehörigen Datenabschnitt (4521 bis 452n) erkannt werden kann.

3. Teilnehmerstation (10; 20; 30) nach Anspruch 1 oder 2, wobei der mindestens eine Fehler in der Nachricht (4; 5; 50) ein Einzelfehler oder ein Doppelfehler ist.

4. Teilnehmerstation (10; 20; 30) nach einem der vorangehenden Ansprüche, wobei die Kommunikationssteuereinrichtung (11; 21; 31) ausgestaltet ist, am Ende der Nachricht (4; 5; 50) eine Prüfsumme (47) zu ergänzen, welche auf eventuell korrigierte Daten-Bits (D) angewendet ist.

5. Teilnehmerstation (10; 20; 30) nach einem der vorangehenden Ansprüche, wobei die mindestens eine Synchronisations-Flanke (49) für eine Hard-Synchronisation oder eine Re-Synchronisation vorgesehen ist.

6. Teilnehmerstation (10; 20; 30) nach einem der vorangehenden Ansprüche, wobei die Bits (E) des Fehlerkorrektur-Codes Einzel-Bits oder Doppelbits sind oder der Fehlerkorrektur-Code eine Kombination von Einzel-Bits und Doppelbits aufweist.

7. Teilnehmerstation (10; 20; 30) nach einem der vorangehenden Ansprüche, wobei die Teilnehmerstation (10; 20; 30) für ein Kommunikationsnetzwerk (1) ausgestaltet ist, bei welchem zumindest zeitweise ein exklusiver, kollisionsfreier Zugriff einer Teilnehmerstation (10, 20, 30) auf eine Busleitung (3) des Kommunikationsnetzwerks (1) gewährleistet ist.

8. Teilnehmerstation (10; 20; 30) nach einem der vorangehenden Ansprüche, wobei die Nachricht (4; 5; 50) eine CAN-Nachricht (4) oder eine CAN FD-Nachricht (5; 50) ist.

9. Kommunikationsnetzwerk (1), mit
einer parallelen Busleitung (3), und
mindestens zwei Teilnehmerstationen (10; 20; 30), welche über die Busleitung (3) derart miteinander verbunden sind, dass sie miteinander kommunizieren können,
wobei mindestens eine der mindestens zwei Teilnehmerstationen (10; 20; 30) eine Teilnehmerstation (20; 30) nach einem der vorangehenden Ansprüche ist.

10. Verfahren zur Korrektur von Einzelfehlern in einer Nachricht (4; 5; 50) eines seriellen Kommunikationsnetzwerks (1), wobei das Verfahren die Schritte aufweist:
Erstellen, mit einer Kommunikationssteuereinrichtung (11; 21; 31), einer Nachricht (4; 5; 50), die seriell an mindestens eine weitere Teilnehmerstation (20; 30; 10) des Kommunikationsnetzwerks (1) zu senden ist,
wobei die Kommunikationssteuereinrichtung (11; 21; 31) die Daten der zu erstellenden Nachricht (4; 5; 50) in mindestens einen Datenabschnitt (4521 bis 452n) unterteilt und in jeden Datenabschnitt (4521 bis 452n) Bits (E) eines Fehlerkorrektur-Codes einfügt, welcher eine Korrektur von mindestens einem Fehler in der Nachricht (4; 5; 50) ermöglicht,
**dadurch gekennzeichnet, dass** die Kommunikationssteuereinrichtung (11; 21; 31) die Bits (E) des Fehlerkorrektur-Codes als Synchronisations-Flanken (49) so einfügt, dass der Abstand der Synchronisations-Flanken (49), welche für eine Synchronisation der mindestens einen weiteren Teilnehmerstation (20; 30; 10) als Empfänger der Nachricht (4; 5; 50) auf die Teilnehmerstation (10; 20; 30) als Sender der Nachricht (4; 5; 50) vorgesehen sind, eine vorbestimmte Obergrenze nicht überschreitet, und
wobei die vorbestimmte Obergrenze gleich einer vorbestimmten Anzahl von Bits ist, die den gleichen Wert haben und die in Folge zwischen Bits (E) des Fehlerkorrektur-Codes auftreten.

## Claims

1. Subscriber station (10; 20; 30) for a serial communication network (1), having
a communication control device (11; 21; 31) for creating a message (4; 5; 50) which is to be serially transmitted to at least one further subscriber station (20; 30; 10) of the communication network (1),
wherein the communication control device (11; 21; 31) is configured to subdivide the data of the message (4; 5; 50) to be created into at least one data section (4521 to 452n) and to insert, into each data section (4521 to 452n), bits (E) of an error correction code (46; 460) which makes it possible to correct at least one error in the message (4; 5; 50),
**characterized in that**
the communication control device (11; 21; 31) is configured to insert the bits (E) of the error correction code as synchronization edges (49) in such a manner that the spacing between the synchronization edges (49), which are provided for the purpose of synchronizing the at least one further subscriber station (20; 30; 10) as the receiver of the message (4; 5; 50) with the subscriber station (10; 20; 30) as the transmitter of the message (4; 5; 50), does not exceed a predetermined upper limit, and
wherein the predetermined upper limit is equal to a predetermined number of bits which have the same value and occur in succession between bits (E) of the error correction code.

2. Subscriber station (10; 20; 30) according to Claim 1, wherein the error correction code is configured in such a manner that it is possible to correct an individual error in each data section (4521 to 452n) and it is possible to detect a double error in the associated data section (4521 to 452n).

3. Subscriber station (10; 20; 30) according to Claim 1 or 2, wherein the at least one error in the message (4; 5; 50) is an individual error or a double error.

4. Subscriber station (10; 20; 30) according to one of the preceding claims, wherein the communication control device (11; 21; 31) is configured to add a checksum (47) at the end of the message (4; 5; 50), which checksum is applied to possibly corrected data bits (D).

5. Subscriber station (10; 20; 30) according to one of the preceding claims, wherein the at least one synchronization edge (49) is provided for hard synchronization or re-synchronization.

6. Subscriber station (10; 20; 30) according to one of the preceding claims, wherein the bits (E) of the error correction code are individual bits or double bits, or the error correction code has a combination of individual bits and double bits.

7. Subscriber station (10; 20; 30) according to one of the preceding claims, wherein the subscriber station (10; 20; 30) is configured for a communication network (1) in which exclusive, collision-free access by a subscriber station (10, 20, 30) to a bus line (3) of the communication network (1) is ensured at least temporarily.

8. Subscriber station (10; 20; 30) according to one of the preceding claims, wherein the message (4; 5; 50) is a CAN message (4) or a CAN FD message (5; 50).

9. Communication network (1) having
a parallel bus line (3), and
at least two subscriber stations (10; 20; 30) which are connected to one another via the bus line (3) in such a manner that they can communicate with one another,
wherein at least one of the at least two subscriber stations (10; 20; 30) is a subscriber station (20; 30) according to one of the preceding claims.

10. Method for correcting individual errors in a message (4; 5; 50) in a serial communication network (1), wherein the method has the steps of:
using a communication control device (11; 21; 31) to create a message (4; 5; 50) which is to be serially transmitted to at least one further subscriber station (20; 30; 10) of the communication network (1),
wherein the communication control device (11; 21; 31) subdivides the data of the message (4; 5; 50) to be created into at least one data section (4521 to 452n) and inserts, into each data section (4521 to 452n), bits (E) of an error correction code which makes it possible to correct at least one error in the message (4; 5; 50),
**characterized in that**
the communication control device (11; 21; 31) inserts the bits (E) of the error correction code as synchronization edges (49) in such a manner that the spacing between the synchronization edges (49), which are provided for the purpose of synchronizing the at least one further subscriber station (20; 30; 10) as the receiver of the message (4; 5; 50) with the subscriber station (10; 20; 30) as the transmitter of the message (4; 5; 50), does not exceed a predetermined upper limit, and
wherein the predetermined upper limit is equal to a predetermined number of bits which have the same value and occur in succession between bits (E) of the error correction code.

## Revendications

1. Station d'abonné (10 ; 20 ; 30) pour un réseau de communication série (1), comprenant
un dispositif de commande de communication (11 ; 21 ; 31) destiné à créer un message (4 ; 5 ; 50), lequel est à envoyer en série à au moins une station d'abonné supplémentaire (20 ; 30 ; 10) du réseau de communication (1),
le dispositif de commande de communication (11 ; 21 ; 31) étant configuré pour subdiviser les données du message (4 ; 5 ; 50) à créer en au moins une portion de données (4521 à 452n) et insérer dans chaque portion de données (4521 à 452n) des bits (E) d'un code de correction d'erreur (46 ; 460), lequel rend possible une correction d'au moins une erreur dans le message (4 ; 5 ; 50), **caractérisée en ce que**
le dispositif de commande de communication (11 ; 21 ; 31) est configuré pour insérer les bits (E) du code de correction d'erreur sous la forme de fronts de synchronisation (49) de telle sorte que l'écart entre les fronts de synchronisation (49), qui sont prévus pour une synchronisation de l'au moins une station d'abonné supplémentaire (20 ; 30 ; 10) en tant que récepteur du message (4 ; 5 ; 50) sur la station d'abonné (10 ; 20 ; 30) en tant qu'émetteur du message (4 ; 5 ; 50), ne dépasse pas une limite supérieure prédéterminée, et
la limite supérieure prédéterminée étant égale à un nombre prédéterminé de bits qui ont la même valeur et qui se produisent à la suite entre les bits (E) du code de correction d'erreur.

2. Station d'abonné (10 ; 20 ; 30) selon la revendication 1, le code de correction d'erreur étant configuré de telle sorte que la correction d'une erreur unique dans chaque portion de données (4521 à 452n) est possible et une double erreur dans la portion de données (4521 à 452n) associée peut être reconnue.

3. Station d'abonné (10 ; 20 ; 30) selon la revendication 1 ou 2, l'au moins une erreur dans le message (4 ; 5 ; 50) étant une erreur unique ou une double erreur.

4. Station d'abonné (10 ; 20 ; 30) selon l'une des revendications précédentes, le dispositif de commande de communication (11 ; 21 ; 31) étant configuré pour compléter à la fin du message (4 ; 5 ; 50) une somme de contrôle (47), laquelle est appliquée sur les bits de données (D) éventuellement corrigés.

5. Station d'abonné (10 ; 20 ; 30) selon l'une des revendications précédentes, l'au moins un front de synchronisation (49) étant prévu pour une synchronisation forcée ou une resynchronisation.

6. Station d'abonné (10 ; 20 ; 30) selon l'une des revendications précédentes, les bits (E) du code de correction d'erreur étant des bits uniques ou des doubles bits, ou le code de correction d'erreur possédant une combinaison de bits uniques et de doubles bits.

7. Station d'abonné (10 ; 20 ; 30) selon l'une des revendications précédentes, la station d'abonné (10 ; 20 ; 30) étant configurée pour un réseau de communication (1) avec lequel un accès exclusif, exempt de collision, d'une station d'abonné (10 ; 20 ; 30) à une ligne de bus (3) du réseau de communication (1) est garanti au moins temporairement.

8. Station d'abonné (10 ; 20 ; 30) selon l'une des revendications précédentes, le message (4 ; 5 ; 50) étant un message CAN (4) ou un message CAN FD (5 ; 50).

9. Réseau de communication (1) comprenant une ligne de bus (3) parallèle et
au moins deux stations d'abonné (10 ; 20 ; 30), qui sont reliées l'une à l'autre par le biais de la ligne de bus (3) de telle sorte qu'elles peuvent communiquer entre elles,
au moins l'une des au moins deux stations d'abonné (10 ; 20 ; 30) étant une station d'abonné (20 ; 30) selon l'une des revendications précédentes.

10. Procédé de correction d'erreurs uniques dans un message (4 ; 5 ; 50) d'un réseau de communication série (1), le procédé comprenant les étapes suivantes :
création, avec un dispositif de commande de communication (11 ; 21 ; 31), d'un message (4 ; 5 ; 50) qui est à envoyer en série à au moins une station d'abonné supplémentaire (20 ; 30 ; 10) du réseau de communication (1),
le dispositif de commande de communication (11 ; 21 ; 31) subdivisant les données du message (4 ; 5 ; 50) à créer en au moins une portion de données (4521 à 452n) et insérant dans chaque portion de données (4521 à 452n) les bits (E) d'un code de correction d'erreur, lequel rend possible une correction d'au moins une erreur dans le message (4 ; 5 ; 50),
**caractérisé en ce que**
le dispositif de commande de communication (11 ; 21 ; 31) insère les bits (E) du code de correction d'erreur sous la forme de fronts de synchronisation (49) de telle sorte que l'écart entre les fronts de synchronisation (49), qui sont prévus pour une synchronisation de l'au moins une station d'abonné supplémentaire (20 ; 30 ; 10) en tant que récepteur du message (4 ; 5 ; 50) sur la station d'abonné (10 ; 20 ; 30) en tant qu'émetteur du message (4 ; 5 ; 50), ne dépasse pas une limite supérieure prédéterminée, et
la limite supérieure prédéterminée étant égale à un nombre prédéterminé de bits qui ont la même valeur et qui se produisent à la suite entre les bits (E) du code de correction d'erreur.
